# EUROPEAN PATENT SPECIFICATION

(11) **EP 3 423 657 B1**
(45) Date of publication and mention of the grant of the patent: **11.12.2019**
(21) Application number: 17713442.6
(22) Date of filing: 28.02.2017
(51) Int. Cl.: B29L 12/00, B29C 65/46, B29C 65/00, E06B 3/22

(54) **PROCESS FOR THE REALIZATION OF DOOR AND WINDOW FRAMES MADE OF PLASTIC MATERIAL**
VERFAHREN ZUR HERSTELLUNG VON TÜR- UND FENSTERRAHMEN AUS KUNSTSTOFF
PROCÉDÉ DESTINÉ À LA RÉALISATION DE CADRES DE PORTE ET DE FENÊTRE EN MATIÈRE PLASTIQUE

(30) Priority: 02.03.2016 IT UB20161255
(43) Date of publication of application: 09.01.2019
(73) Proprietor: Graf Synergy S.r.l., 41015 Nonantola (MO) (IT)
(72) Inventor: VACCARI, Andrea, 41015 Nonantola (MO) (IT); VERRINI, Gilberto, 41015 Nonantola (MO) (IT)
(74) Representative: Luppi, Emanuele
(86) International application number: PCT/IB2017/051176
(87) International publication number: WO 2017/149460

(56) References cited:
- EP-A1- 2 487 313
- DE-A1- 3 943 333

## Description

### Technical Field

The present invention relates to a process for the realization of profiled elements made of plastic material for door and window frames.

### Background Art

The need is known to be particularly felt to provide frames, such as doors and windows, which ensure a degree of thermal insulation between the internal and external environments such as to reduce energy consumption.

This need is particularly felt even in the field of door and window frames made of plastic material, particularly PVC, despite they already have a high degree of thermal insulation with respect to the metal frames available on the market thanks to the reduced thermal conductivity of plastic.

These profiled elements are made of plastic resins and have a particular multichamber structure inside the profiled elements themselves which allows ensuring a high degree of thermal insulation.

The plastic profiled elements so realized have the main drawback linked to poor resistance due to stresses and movements applied by externally exerted forces.

With reference to this drawback, prolonged exposure to sunrays e.g. involves heating of the plastic profiled elements due to the transmission of heat by irradiation with a consequent increase in the risk of deformation of the profiled elements themselves.

To overcome this drawback the use is known of reinforcing elements introduced in the containment seats defined in the profiled elements, and which extend along the whole extension of the profiled elements themselves, to provide for greater stability and reinforcement to the structure of the profiled elements themselves.

Generally, such reinforcing elements are the type of metal bars which are hardly deformable by applied stresses and which are inserted in the containment seat and screwed to the structure of the profiled elements by means of machines provided with compressed air screwing systems.

The use of the fixing screws implies a transmission of heat through the fixing screws themselves between the outer part and the inner part of the profiled element structure.

The plastic door and window frames thus realized have the main drawback linked to the insufficient thermal insulation between the internal and external environments that the frames themselves separate, with related energy supply costs for maintaining the desired temperature in the internal environments.

Another drawback is linked to the process for the realization of such frames since the drilling of the profiled element for the insertion of the fixing screws implies the formation of chip obtained from the plastic profiled element and any excess material residues to be removed as a result of such machining process.

Moreover, the realization processes of known type can create imperfections on the visible surfaces of the profiled elements, thus jeopardizing the aesthetic appearance and overall pleasant look of the profiled elements themselves.

Still another drawback is linked to the processing time required for the fixing of the reinforcing elements to the profiled elements by means of the fixing screws, to the high costs of machinery for manufacturing the profiled elements themselves and related maintenance costs.

Another drawback is linked to the high energy consumption required by known types of machinery for the realization of the profiled elements and in particular for the screwing of the reinforcing elements to the profiled elements themselves since the compressed air screwing systems are characterized by not negligible energy consumption.

Not the least inconvenience is related to the noise disturbance due to the drilling operations of the profiled elements made by means of the screwing systems of known type.

DE 39 43 333 A1 discloses a process for the realization of door and window frames made of plastic material according to the preamble of claim 1.

### Description of the Invention

The main aim of the present invention is to provide a process for the realization of door and window frames made of plastic material which allows improving the thermal insulation provided by the frames themselves to limit the energy consumption required for maintaining the desired temperature.

One object of the present invention is to provide a process for the realization of door and window frames made of plastic material which allows eliminating the formation of chip and relative excess material due to the drilling operations of the profiled elements by means of the fixing screws.

A further object of the present invention is to provide a process for the realization of door and window frames made of plastic material which allows reducing the processing time required for the fixing of the reinforcing elements to the structure of the profiled elements as well as the manufacturing and maintenance costs of the machinery used for the realization of the profiled elements themselves.

Another object of the present invention is to provide a process for the realization of door and window frames made of plastic material which allows reducing the energy consumption required for the fixing of the reinforcing elements to the structure of the profiled elements.

Another object of the present invention is to provide a process for the realization of door and window frames made of plastic material which allows reducing the noise disturbance due to the machining processes of the profiled elements.

Another object of the present invention is to provide a process for the realization of door and window frames made of plastic material which allows overcoming the mentioned drawbacks of the prior art within the ambit of a simple, rational, easy, effective to use as well as affordable solution.

The above mentioned objects are achieved by the present process for the realization of door and window frames made of plastic material having the characteristics of claim 1.

### Brief Description of the Drawings

Other characteristics and advantages of the present invention will become more evident from the description of a preferred, but not exclusive, embodiment of a process for the realization of door and window frames made of plastic material, illustrated by way of an indicative, but non-limiting, example in the accompanying drawings, wherein:

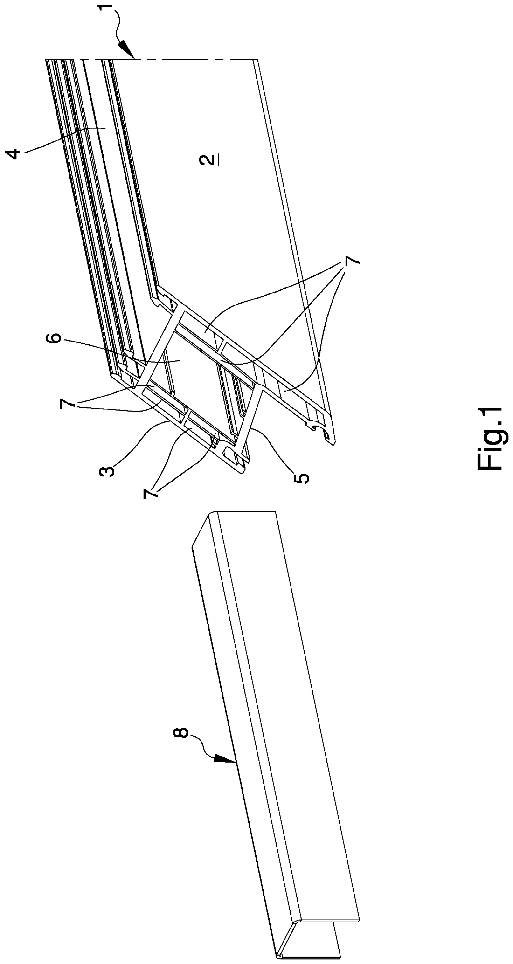

Figure 1 is an axonometric view of a detail of the profiled elements used for the realization of door and window frames by means of the process according to the invention;
Figures 2 to 4 schematically illustrate the process according to the invention in a first embodiment;
Figures 5 to 7 schematically illustrate a process not forming part of the invention in a second example;
Figures 8 to 10 schematically illustrate a process not forming part of the invention in a third example.

### Embodiments of the Invention

The process for the realization of door and window frames made of plastic material comprises a step of providing at least a profiled element 1 made of plastic material for the realization of door and window frames.

Usefully, the profiled element 1 is adapted to make frameworks for frames and hinged elements such as windows or doors.

The profiled element 1 is made of PVC, but plastic materials of the heat-sealable type different to PVC cannot be ruled out.

The profiled element 1 shown in the figures represents the framework of the frame of doors/windows fixed to the perimeter sides of an opening to shut formed in the walls of buildings.

In particular, the profiled element 1 has an elongated shape and is provided with a first main face 2, a second main face 3, a first side face 4 and a second side face 5 which, in the present discussion, should be understood as follows:
- the first main face 2 and the second main face 3 are the visible faces of the frame when the frame itself is associated with the perimeter sides of the opening to shut;
- the first side face 4 is the face of the profiled element 1 which lies substantially on the outer perimeter of the frame when the frame itself is assembled to the perimeter sides of the opening to shut;
- the second side face 5 is the face of the profiled element 1 which lies substantially on the inner perimeter of the frame and is adapted to enter into contact with the contact surface of the hinged element.

To allow the joining by sealing of several profiled elements 1, each profiled element 1 comprises a pair of head surfaces suitably cut at 45° to define a coupling between two right-angled profiled elements 1.

Furthermore, the profiled element 1 comprises a main hollow chamber 6, which extends for its entire length and internally to the profiled element itself, and a plurality of secondary chambers 7, hollow and suitably shaped, surrounding the main chamber 6 and adapted to give the profiled element 1 a high degree of thermal insulation.

The process comprises a step of providing at least a reinforcing element 8 made of metal material.

In particular, each profiled element 1 is provided with a relative reinforcing element 8 which is fixable thereto.

The reinforcing element 8 has a tubular shape with a substantially U-shaped profile.

The profiled element 1 has a containment seat 6 of the reinforcing element 8 substantially coincident with the main chamber 6 and defining a space such as to contain the reinforcing element itself substantially to size.

The process comprises a step of inserting the reinforcing element 8 inside the containment seat 6 by means of suitable insertion means.

Consequently, the process comprises a step of fixing the reinforcing element 8 to the profiled element 1 by means of fixing means 9 between at least a portion of the profiled element 10 and at least a portion of the reinforcing element 11.

According to the invention, the fixing step comprises a heating step of the portion of the reinforcing element 11 by means of electromagnetic induction means 12 for obtaining the heated portion of the reinforcing element 11.

Usefully, the fixing means 9 are adapted to cooperate with at least one of the portion of the profiled element 10 and the heated portion of the reinforcing element 11 for the fixing of the portion of the reinforcing element 11 to the portion of the profiled element 10.

In the preferred embodiment shown in the figures, the electromagnetic induction means 12 comprise an electromagnet and alternating current power means adapted to supply power to the electromagnet itself for the generation of a magnetic field with frequencies of the magnitude of hundreds of KHz.

The power supply of the electromagnet by means of alternating current power means generates induced currents, commonly known as eddy currents, on the portion of the reinforcing element 11 (made of metal material) immersed in the magnetic field generated by the electromagnetic induction means 12.

These Foucault (eddy) currents are adapted to heat the portion of the reinforcing element 11 with consequent dissipation of the heat by Joule effect by the portion of the reinforcing element itself.

Depending on the power supplied by the power supply means to the electromagnet, the Foucault currents induced on the portion of reinforcing element 11 vary and, consequently, the amount of heat dissipated by Joule effect by the portion of the reinforcing element itself.

Advantageously, the electromagnetic induction means 12 are adapted to the induction of the Foucault currents at specific areas of interest of an element made of a conductive material, which in the particular embodiments shown in the figures coincides with the portion of the reinforcing element 11.

The process also comprises a sealing step of a plurality of profiled elements 1 for the realization of a window/door frame.

This sealing step is carried out subsequently to the fixing step of each reinforcing element 8 to a respective profiled element 1.

In a first embodiment of the process, the heating step of the reinforcing element 8 is preliminary to the sealing step of the profiled elements 1.

In this regard, at the time of sealing of each head surface of a profiled element 1 to the head surface of another profiled element 1, each reinforcing element 8 proves to be fixed inside the respective main chamber 6.

A second alternative embodiment of the process cannot however be ruled out wherein the heating step of the reinforcing element 8 is subsequent to the sealing step of the profiled elements 1.

In this second embodiment, after the step of inserting each reinforcing element 8 in the main chamber 6 of each respective profiled element 1, the sealing step is carried out of each head surface of each profiled element 1 to the head surface of another profiled element 1 to obtain the window/door frame.

Following this, the heating step is carried out, sequentially or simultaneously, of each of the reinforcing elements 8 inserted in the relative profiled element 1.

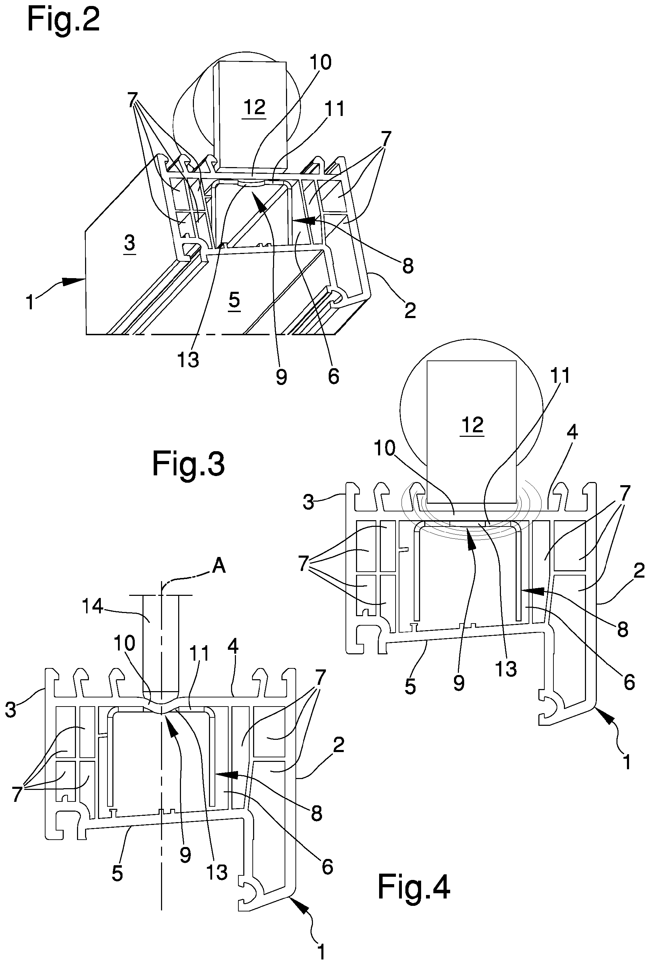

Depending on the specific manufacturing requirements of the window/door frames, the sealing step of the profiled elements 1 can therefore be carried out preliminary or subsequently to the heating step, and therefore to the fixing step. In a first preferred embodiment shown in Figures 2 to 4, the heating step comprises a softening step of the portion of the profiled element 10, wherein the heated portion of the reinforcing element 11 is arranged in contact with the portion of the profiled element 10 and, more in detail, the heated portion of the reinforcing element 11 is adapted to conduct heat to the portion of the profiled element 10 to obtain the softened portion of the profiled element 10.

Usefully, as is apparent from Figures 2 to 4, the portion of the reinforcing element 11 is in contact with the inner surface of the main chamber 6 arranged at the portion of the profiled element 10.

In the present discussion, by the term softened is meant the particular thermodynamic state in which the portion of the profiled element 10, subjected to the heat conduction provided by the portion of the reinforcing element 11, reaches the softening point.

In particular, in such a thermodynamic state the portion of the profiled element 10 does not have a defined melting point, therefore passing from the solid state to the fluid state.

Usefully, the electromagnetic induction means 12 are adapted to generate Foucault currents induced to the portion of the reinforcing element 11 resulting in the heating by Joule effect of the portion of the reinforcing element itself.

The amount of heat dissipated by Joule effect by the portion of the reinforcing element 11 involves the heating by conduction of the portion of the profiled element 10 which, by remaining subjected to such heat, softens and is therefore subjected to plastic deformation.

In particular, in the first embodiment shown in Figures 2 to 4, the fixing means 9 comprise a through hole 13 formed on the portion of the reinforcing element 11.

More in detail, the heating of the portion of the reinforcing element 11 implies the heating of the portion of the profiled element 10 arranged in contact with and surrounding the through hole 13, with the obtaining of the softened portion of the profiled element 10.

Usefully, the fixing step comprises a pressure step of the softened portion of the profiled element 10 at least partially inside the through hole 13 and this pressure step is carried out subsequently to the softening step.

The blocking of the reinforcing element 8 to the profiled element 1 is carried out by means of suitable pressure means 14 adapted to exert a pressing force in a direction such as to allow the insertion of the softened portion of the profiled element 10 inside the through hole 13.

Preferably, the pressure means 14 are selected from punches and rollers, with hydraulic or electric operation, which apply the pressing force on the outer surface of the softened portion of the profiled element 10 so as to define the fitting thereof inside the through hole 13.

The pressure means 14 are movable along a direction of pressure A substantially orthogonal to the outer surface of the portion of the profiled element 10 arranged at the portion of the reinforcing element 11 provided with the through hole 13.

More in detail, the deformation applied to the softened portion of the profiled element 10 by means of the pressure means 14 is of the plastic type because, once the heat conduction between the portion of the reinforcing element 11 and the portion of the profiled element 10 is completed, the transition is obtained of the state of aggregation of the portion of the profiled element itself from fluid to solid.

Advantageously, at the through hole 13, the surface of the portion of the reinforcing element 11 facing towards the inner wall of the main chamber 6 has a knurled profile provided with a plurality of projecting parts which project from the surface itself having a substantially pointed conformation.

During the pressure step, the projecting parts fit inside the inner wall of the main chamber 6 arranged at the softened portion of the profiled element 10, in order to maximize the blocking of the reinforcing element 8 to the profiled element 1.

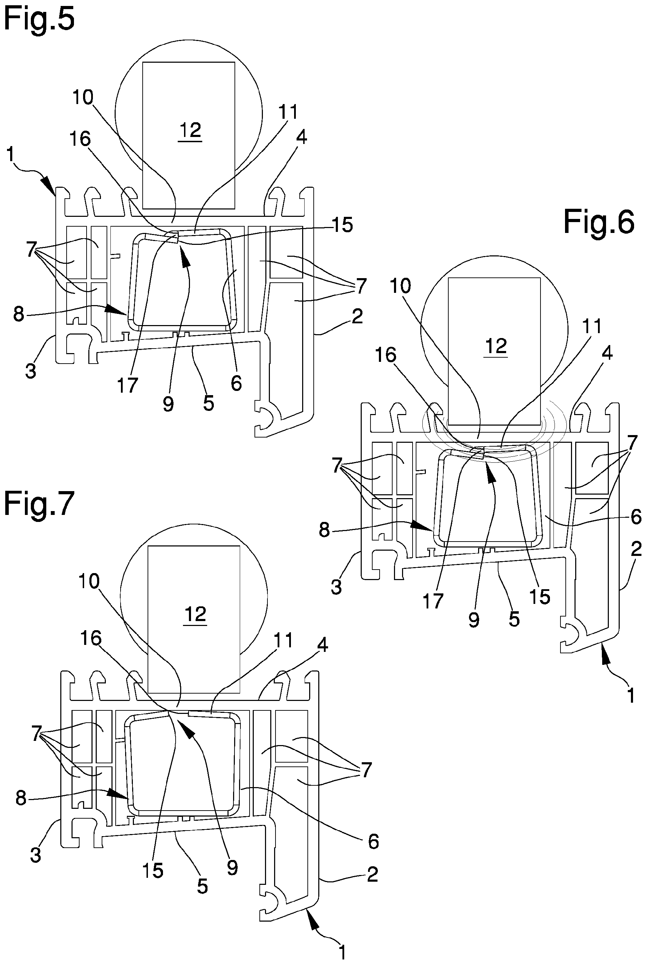

In a second example shown in Figures 5 to 7, not forming part of the invention, the fixing means 9 comprise:
- a first end 15 and a second end 16 of the portion of the reinforcing element 11; and
- temporary connection means 17 interposed between the first end 15 and the second end 16 adapted to keep the ends 15, 16 in contact with each other and moved away from the portion of the profiled element 10.

The temporary connection means 17 are adapted to keep the ends 15, 16 in a forced coupling position and moved away from the inner surface of the main chamber 6 in order to allow the easy insertion of the reinforcing element 8 inside the main chamber itself.

As can be seen from Figures 5 and 6, when the ends 15, 16 are kept in contact by the temporary connection means 17, the reinforcing element 8 has a tubular conformation with a substantially rectangular cross section.

Preferably, the temporary connection means 17 are made of a material with a melting temperature lower than the melting temperature of the reinforcing element 8.

In the particular example shown in the figures, the selected material is tin since it has a melting temperature lower than the melting temperature of the reinforcing element 8.

Alternative examples cannot however be ruled out in which the temporary connection means 17 comprise adhesive materials or other metal materials or metal alloys which have a lower melting temperature than the melting temperature of the reinforcing element 8.

In particular, the fixing means 9 are movable between:
- a first configuration, wherein the electromagnetic induction means 12 are deactivated and the ends 15, 16 are at least partially coupled to each other by means of the interposition of the temporary connection means 17 and moved away with respect to the portion of the profiled element 10; and
- a second configuration, wherein the electromagnetic induction means 12 are activated and the portion of the reinforcing element 11 is adapted to transmit heat to the temporary connection means 17 wherein, once the relative melting temperature is achieved, the ends 15, 16 decouple from each other. In such second configuration, the ends 15, 16 are moved away from each other and at least one of the ends 15, 16 enters in contact with the portion of the profiled element 10.

More in detail, when the electromagnetic induction means 12 are activated, the Foucault currents induced on the portion of the reinforcing element 11 cause heat dissipation by Joule effect from the portion of the reinforcing element itself which consequently also involves the temporary connection means 17 interposed between the ends 15, 16.

Depending on the amount of heat conducted from the ends 15, 16 to the temporary connection means 17, the temporary connection means themselves undergo a gradual state transformation from solid to liquid in which, once transformation has occurred, the ends 15, 16 move away from the mutual forced coupling position defined by the temporary connection means themselves in the solid state.

In the second configuration, therefore, the ends 15, 16 are in contact with the inner wall of the main chamber 6 to define a firm blocking of the portion of the reinforcing element 11 to the portion of the profiled element 10.

Advantageously, at the ends 15, 16, the surface of the portion of the reinforcing element 11 facing towards the inner wall of the main chamber 6 has a knurled profile.

It follows that when the ends 15, 16 are in the second configuration, the pointed-shaped projecting parts of the surface of the portion of the reinforcing element 11 fit with the inner wall of the main chamber 6 arranged at the portion of the profiled element 10, in order to facilitate a firmer blocking of the portion of the reinforcing element 11 to the portion of the profiled element 10.

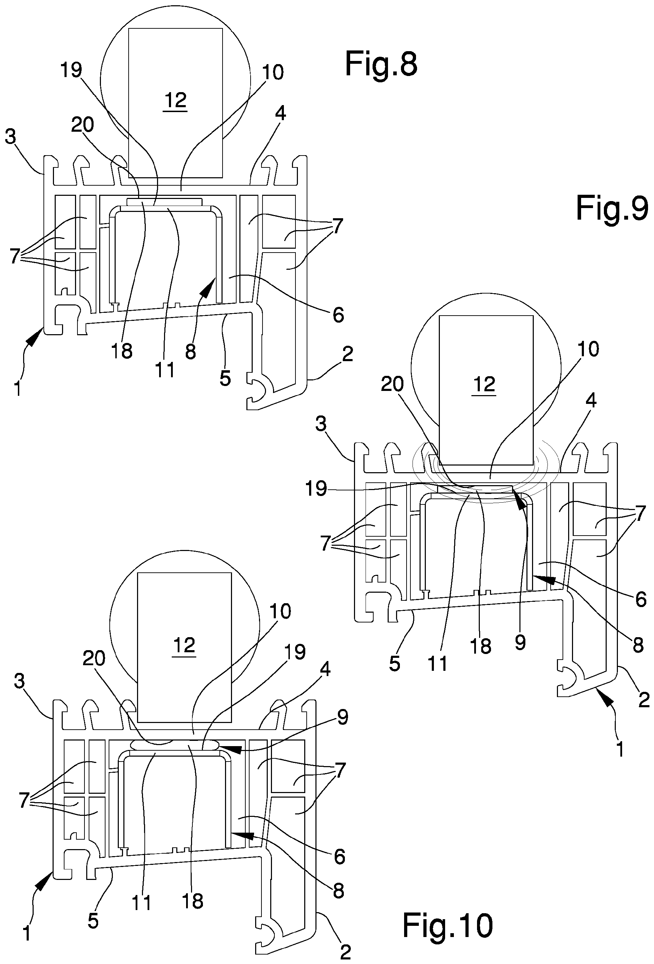

In a third alternative example shown in Figures 8 to 10, not forming part of the invention, the fixing means 9 comprise a filling body 18 interposed between the portion of the reinforcing element 11 and the portion of the profiled element 10.

Usefully, the filling body 18 is made of a heat-expanding material and undergoes an increase in volume following a heat supply to the filling body itself.

Usefully, the filling body 18 has a substantially flattened shape and is interposed between the portion of the reinforcing element 11 and the portion of the profiled element 10.

More in detail, the filling body 18 comprises a first portion 19 associated with the portion of the reinforcing element 11, and a second free portion 20 facing towards the wall of the main chamber 6 arranged at the portion of the profiled element 10.

In this third example, the fixing means 9 are switchable between:
- an idle configuration, wherein the electromagnetic induction means 12 are deactivated and the filling body 18 has unchanged volume. More in detail, the second portion 20 is free and moved away from the portion of the profiled element 10;
- an expansion configuration, wherein the electromagnetic induction means 12 are activated and the heat generated by the electromagnetic induction means themselves is transmitted from the portion of the reinforcing element 11 to the fixing means 9, coincident with the filling body 18.

In this expansion configuration, the filling body 18 has expanded volume with respect to the idle configuration and the second portion 20 is arranged in contact with the portion of the profiled element 10.

More in detail, the second portion 20 is adhering to the wall of the main chamber 6 arranged at the portion of the profiled element 10.

In other words, similarly to what is described for the first embodiment and the second example, the electromagnetic induction means 12 are adapted to generate Foucault currents, induced in turn to the portion of the reinforcing element 11, with consequent heating by Joule effect of the portion of the reinforcing element itself.

The amount of heat dissipated by Joule effect by the portion of the reinforcing element 11 causes heating, by conduction, of the filling body 18, which expands up to the complete filling of the empty space between the portion of the reinforcing element 11 and the inner wall of the main chamber 6 arranged at the portion of the profiled element 10.

More particularly, in the expansion configuration, the first portion 19 and the second portion 20 apply an equal and opposite pressing force respectively, in a direction substantially coincident with the direction of pressure A, on the portion of the reinforcing element 11 and on the inner surface of the main chamber 6 respectively, which is arranged at the portion of the profiled element 10 so that the reinforcing element 8 is blocked in a fixed position inside the main chamber 6.

Advantageously, the surface of the portion of the reinforcing element 11 facing towards the inner wall of the main chamber 6, and to which the first portion 19 is fixed, has a knurled profile provided with a plurality of projecting parts which project from the surface itself having a substantially pointed shape.

During the expansion configuration, the pressing force of the first portion 19 towards the portion of the reinforcing element 11 causes the projecting parts fit to the first portion itself in order to maximize the blocking of the reinforcing element 8 to the profiled element 1.

It has in practice been found that the described invention achieves the intended objects and in particular the fact is underlined that the described process allows eliminating the heat dispersion by means of the fixing screws of the reinforcing elements to the relative profiled elements, a dispersion which instead occurs in the door and window frames of known type.

In other words, the non-drilling of the profiled elements allows reducing the thermal conductivity of the frames made of plastic material, maximizing the thermal insulation provided by the frames themselves with a consequent reduction in the energy consumption required to keep the desired temperature inside the rooms.

By eliminating the drilling phases of the profiled elements for fixing the reinforcing elements, chip formation is avoided as well as the relative excess material and noise disturbance due to the drilling operations of the profiled elements.

The process described enables to reduce the machining time required for fixing the reinforcing elements to the structure of the profiled elements as well as the manufacturing and maintenance costs of the machinery used for making the profiled elements themselves, as well as the energy consumption required for fixing the reinforcing elements to the profiled elements.

## Claims

1. Process for the realization of door and window frames made of plastic material, comprising:
- at least a step of providing at least a profiled element (1) made of plastic material for the realization of door and window frames;
- at least a step of providing at least a reinforcing element (8) made of metal material, said profiled element (1) having at least a containment seat (6) of said reinforcing element (8);
- at least a step of inserting said reinforcing element (8) inside said containment seat (6);
- at least a step of fixing said reinforcing element (8) to said profiled element (1) by means of fixing means (9) between at least a portion of the profiled element (10) and at least a portion of the reinforcing element (11);
wherein said fixing step comprises at least a heating step of said portion of the reinforcing element (11) by means of electromagnetic induction means (12), said fixing means (9) being adapted to cooperate with at least one of said portion of the profiled element (10) and said heated portion of the reinforcing element (11) for the fixing of said portion of the reinforcing element (11) to said portion of the profiled element (10);
wherein said heating step comprises a softening step of said portion of the profiled element (10) wherein said heated portion of the reinforcing element (11) is arranged in contact with said portion of the profiled element (10), said heated portion of the reinforcing element (11) being adapted to yield heat to said portion of the profiled element (10) to obtain said softened portion of the profiled element (10);
**characterized in that**:
- said fixing means (9) comprise at least a through hole (13) formed on said portion of the reinforcing element (11); and
- said fixing step comprises at least a pressure step of said softened portion of the profiled element (10) at least partially inside said through hole (13), said pressure step being subsequent to said softening step.

2. Process according to claim 1, **characterized in that** it comprises a sealing step of a plurality of said profiled elements (1) for the realization of at least a door and window frame, said sealing step being subsequent to said fixing step.

3. Process according to claim 2, **characterized in that** said heating step is preliminary to said sealing step.

4. Process according to claim 2, **characterized in that** said heating step is subsequent to said sealing step.

## Patentansprüche

1. Verfahren zur Herstellung von Tür- und Fensterrahmen aus Kunststoff, umfassend:
- mindestens einen Schritt zum Bereitstellen mindestens eines Profilelements (1) aus Kunststoff zur Herstellung von Tür- und Fensterrahmen;
- mindestens einen Schritt zum Bereitstellen mindestens eines Verstärkungselements (8) aus Metallmaterial, wobei das Profilelement (1) mindestens einen Einhausungssitz (6) des Verstärkungselements (8) aufweist;
- mindestens einen Schritt zum Einsetzen des Verstärkungselements (8) in den Einhausungssitz (6);
- mindestens einen Schritt zum Befestigung des Verstärkungselements (8) an dem Profilelement (1) mittels Befestigungsmitteln (9) zwischen mindestens einem Abschnitt des Profilelements (10) und mindestens einem Abschnitt des Verstärkungselements (11);
wobei der Befestigungsschritt mindestens einen Erwärmungsschritt des Abschnitts des Verstärkungselements (11) mittels elektromagnetischer Induktionsmittel (12) umfasst, wobei die Befestigungsmittel (9) geeignet sind, mit mindestens einem der Abschnitte des Profilelements (10) und des erwärmten Abschnitts des Verstärkungselements (11) zusammenzuwirken, um den Abschnitt des Verstärkungselements (11) an dem Abschnitt des Profilelements (10) zu befestigen;
wobei der Erwärmungsschritt einen Erweichungsschritt des Abschnitts des Profilelements (10) umfasst, wobei der erwärmte Abschnitt des Verstärkungselements (11) in Kontakt mit dem Abschnitt des Profilelements (10) angeordnet wird, wobei der erwärmte Abschnitt des Verstärkungselements (11) angepasst ist, um Wärme an den Abschnitt des Profilelements (10) abzugeben, um den erweichten Abschnitt des Profilelements (10) zu erhalten;
**dadurch gekennzeichnet, dass**:
- die Befestigungsmittel (9) mindestens ein Durchgangsloch (13) umfassen, das auf dem Abschnitt des Verstärkungselements (11) ausgebildet ist; und
- der Befestigungsschritt mindestens einen Belastungsschritt des erweichten Abschnitts des Profilelements (10) mindestens teilweise innerhalb der Durchgangsbohrung (13) umfasst, wobei der Belastungsschritt dem Erweichungsschritt folgt.

2. Verfahren nach Anspruch 1, **dadurch gekennzeichnet, dass** es einen Dichtungsschritt von einer Vielzahl der Profilelemente (1) zur Realisierung mindestens eines Tür- und Fensterrahmens umfasst, wobei der Dichtungsschritt dem Befestigungsschritt folgt.

3. Verfahren nach Anspruch 2, **dadurch gekennzeichnet, dass** der Erwärmungsschritt dem Dichtungsschritt vorausgeht.

4. Verfahren nach Anspruch 2, **dadurch gekennzeichnet, dass** der Erwärmungsschritt dem Dichtungsschritt folgt.

## Revendications

1. Procédé destiné à la réalisation de cadres de porte et de fenêtre en matière plastique, comprenant :
- au moins une étape de fourniture d'au moins un élément profilé (1) en matière plastique pour la réalisation de cadres de porte et de fenêtre ;
- au moins une étape de fourniture d'au moins un élément de renforcement (8) en matière métallique, ledit élément profilé (1) ayant au moins un siège de retenue (6) dudit élément de renforcement (8) ;
- au moins une étape d'insertion dudit élément de renforcement (8) à l'intérieur dudit siège de retenue (6) ;
- au moins une étape de fixation dudit élément de renforcement (8) audit élément profilé (1) au moyen de moyens de fixation (9) entre au moins une partie de l'élément profilé (10) et au moins une partie de l'élément de renforcement (11) ;
dans lequel ladite étape de fixation comprend au moins une étape de chauffage de ladite partie de l'élément de renforcement (11) au moyen de moyens d'induction électromagnétique (12), lesdits moyens de fixation (9) étant adaptés pour coopérer avec au moins l'une de ladite partie de l'élément profilé (10) et de ladite partie chauffée de l'élément de renforcement (11) pour la fixation de ladite partie de l'élément de renforcement (11) à ladite partie de l'élément profilé (10) ;
dans lequel ladite étape de chauffage comprend une étape de ramollissement de ladite partie de l'élément profilé (10) dans lequel ladite partie chauffée de l'élément de renforcement (11) est agencée en contact avec ladite partie de l'élément profilé (10), ladite partie chauffée de l'élément de renforcement (11) étant adaptée pour céder de la chaleur à ladite partie de l'élément profilé (10) pour obtenir ladite partie ramollie de l'élément profilé (10) ;
**caractérisé en ce que** :
- lesdits moyens de fixation (9) comprennent au moins un trou débouchant (13) formé sur ladite partie de l'élément de renforcement (11) ; et
- ladite étape de fixation comprend au moins une étape de pression de ladite partie ramollie de l'élément profilé (10) au moins partiellement à l'intérieur dudit trou débouchant (13), ladite étape de pression étant postérieure à ladite étape de ramollissement.

2. Procédé selon la revendication 1, **caractérisé en ce qu'**il comprend une étape de scellement d'une pluralité desdits éléments profilés (1) pour la réalisation d'au moins un cadre de porte et de fenêtre, ladite étape de scellement étant postérieure à ladite étape de fixation.

3. Procédé selon la revendication 2, **caractérisé en ce que** ladite étape de chauffage est préliminaire à ladite étape de scellement.

4. Procédé selon la revendication 2, **caractérisé en ce que** ladite étape de chauffage est postérieure à ladite étape de scellement.
